# EUROPEAN PATENT APPLICATION

(11) **EP 3 385 352 A1**
(43) Date of publication of application: **10.10.2018**
(21) Application number: 16870637.2
(22) Date of filing: 29.11.2016
(51) Int. Cl.: C09K 3/00, C02F 11/00, C09K 17/32, E02D 3/00, E02F 7/00

(54) **AGENT FOR DECREASING FLUIDITY OF SOLID-LIQUID MIXTURE, AND METHOD FOR PRODUCING LOW-FLUIDITY MIXTURE**

(30) Priority: 30.11.2015 JP 2015234231; 30.11.2015 JP 2015234232; 07.12.2015 JP 2015238813
(71) Applicant: Growth Partners, Limited, Tokyo 107-0062 (JP)
(72) Inventor: AIHARA, Keiichi, Tokyo 107-0062 (JP); FUJII, Shigeatsu, Tokyo 107-0062 (JP); MIYAMOTO, Mitsuya, Izunokuni-shi Shizuoka 410-2211 (JP); OYA, Yohei, Izunokuni-shi Shizuoka 410-2221 (JP); TERAMURA, Satoshi, Nagoya-shi Aichi 451-0025 (JP); MINAGAWA, Hideaki, Tokyo 174-0041 (JP); OYANE, Yuichi, Mitoyo-shi Kagawa 769-1407 (JP)
(74) Representative: LKGLOBAL Lorenz & Kopf PartG mbB Patentanwälte
(86) International application number: PCT/JP2016/085296
(87) International publication number: WO 2017/094700

(57) **Abstract**

Provided are an agent for decreasing the fluidity of a solid-liquid mixture and a method, whereby it becomes possible to decrease the fluidity of a solid-liquid mixture within a short time and by a simple operation while preventing the increase in the volume of the solid-liquid mixture, regardless of the chemical composition of the solid-liquid mixture. The agent for decreasing the fluidity of a solid-liquid mixture according to the present invention is a granular material having a structure formed by entangled fibers. In one embodiment of the agent for decreasing the fluidity, the granular material has an average particle diameter of 300 µm or less and a specific surface area of 0.25 to 100 m2/g inclusive as measured by a BET method. In another embodiment of the agent for decreasing the fluidity, the granular material has a porosity of 50% or more as calculated in accordance with the formula: (1 - (bulk density)/(true density)) × 100 and a specific surface area of 0.25 to 100 m2/g inclusive as measured by a BET method. It is preferred that each of the fibers contains a hydrophilic polymer. The hydrophilic polymer is preferably cellulose. The solid-liquid mixture is preferably mud.

## Description

### TECHNICAL FIELD

The present invention relates to an agent for decreasing the fluidity of a solid-liquid mixture, and a method for producing a low-fluidity mixture.

### BACKGROUND ART

Conventionally, for civil construction works such as river bank construction, when excavated deteriorated soil is replaced with improved soil or good-quality soil in soil banking site, a huge amount of materials and works are required for the constructional process, and thus, as a means for simplifying the replacement with the improved soil having reinforced strength, a method of using finely divided used paper is suggested (see, Patent Documents 1, 2 and 3).
Patent Document 1: Japanese Unexamined Patent Application, Publication No. 2007-197902
Patent Document 2: Japanese Unexamined Patent Application, Publication No. 2008-106088
Patent Document 3: Japanese Unexamined Patent Application, Publication No. 2001-121193

### DISCLOSURE OF THE INVENTION

### Problems to be Solved by the Invention

However, according to a conventional method using finely divided used paper, it is difficult to achieve the improved soil which has a strength property that can be actually used for civil construction works, and therefore it is believed that obtainment of the improved soil for reinforcement, which has enough strength for actual use, from excavated soil obtained at a construction site in a short time has high effectiveness.

By noting that the excavated deteriorated soil is a solid-liquid mixture which contains solid components of soil and water, the inventors of the present invention believed that the aforementioned difficulties in civil construction works can be overcome if the fluidity of the solid-liquid mixture is decreased within a short time by a simple operation. The inventors also believed that, for decreasing the fluidity of the solid-liquid mixture, it is necessary to prevent an increase in volume from the viewpoint of volume reduction, cost, and the like.

The present invention is devised in view of the problems described above, and an object thereof is to provide an agent for decreasing the fluidity of a solid-liquid mixture and a method, whereby it becomes possible to decrease the fluidity of a solid-liquid mixture within a short time by a simple operation while preventing the increase in the volume, regardless of the chemical composition of the solid-liquid mixture.

### Means for Solving the Problems

The inventors of the present invention found that the aforementioned problems can be solved by infiltrating and capturing a solid phase and a liquid phase of the solid-liquid mixture in voids that are formed by entangled fibers, specifically, by using an agent for decreasing the fluidity of a solid-liquid mixture, which is a specific granular material having a structure formed by entangled fibers, and thus completed the present invention accordingly.

A first embodiment of the present invention is an agent for decreasing the fluidity of a solid-liquid mixture containing a granular material having a structure formed by entangled fibers in which the granular material has an average particle diameter of 300 µm or less and a specific surface area of 0.25 m²/g or more and 100 m²/g or less as measured by a BET method.

A second embodiment of the present invention is an agent for decreasing the fluidity of a solid-liquid mixture containing a granular material having a structure formed by entangled fibers in which the granular material has a porosity of 50% or more as calculated in accordance with the formula: (1 - (bulk density)/(true density)) × 100 and a specific surface area of 0.25 m²/g or more and 100 m²/g or less as measured by a BET method.

A third embodiment of the present invention is a method for producing a low-fluidity mixture including mixing a solid-liquid mixture and the aforementioned agent for decreasing the fluidity to obtain a low-fluidity mixture. One mode for carrying out the third embodiment of the present invention is a method for producing a low-fluidity mixture including mixing a solid-liquid mixture and the agent for decreasing the fluidity of a solid-liquid mixture in a container to obtain a low-fluidity mixture, in which the agent for decreasing the fluidity contains a granular material having a structure formed by entangled fibers, and the granular material has an average particle diameter of 300 µm or less and a specific surface area of 0.25 m2/g or more and 100 m2/g or less as measured by a BET method, or a porosity of 50% or more as calculated in accordance with the formula: (1 - (bulk density)/(true density)) × 100 and a specific surface area of 0.25 m2/g or more and 100 m2/g or less as measured by a BET method. It is a method in which the solid-liquid mixture is mixed in an amount of 50% by volume or more but less than 100% by volume relative to the target loading volume of the low-fluidity mixture into the container, and the total volume of the use amount of the solid-liquid mixture and the agent for decreasing the fluidity exceeds the target loading volume of the low-fluidity mixture into the container.

A fourth embodiment of the present invention is a method for conveying a low-fluidity mixture including moving the low-fluidity mixture obtained by the aforementioned method after loading the low-fluidity mixture on a moving body.

A fifth embodiment of the present invention is a method for increasing the degree of fluidity decrease of a solid-liquid mixture by infiltrating and capturing a solid phase and a liquid phase of the solid-liquid mixture in voids that are formed by entangled fibers.

A sixth embodiment of the present invention is a method for increasing the degree of freedom of a chemical composition of a solid-liquid mixture as a subject for decreasing the fluidity by infiltrating and capturing a solid phase and a liquid phase of the solid-liquid mixture in voids that are formed by entangled fibers.

A seventh embodiment of the present invention is a method for preventing a volume increase of a solid-liquid mixture after decreasing the fluidity by infiltrating and capturing a solid phase and a liquid phase of the solid-liquid mixture in voids that are formed by entangled fibers.

### Effects of the Invention

According to the present invention, it is possible to decrease the fluidity of a solid-liquid mixture within a short time by a simple operation while preventing the increase in the volume, regardless of the chemical composition of the solid-liquid mixture. Furthermore, according to the present invention, an agent for decreasing the fluidity of a solid-liquid mixture and a method which enable the above can be provided.

### BRIEF DESCRIPTION OF THE DRAWINGS

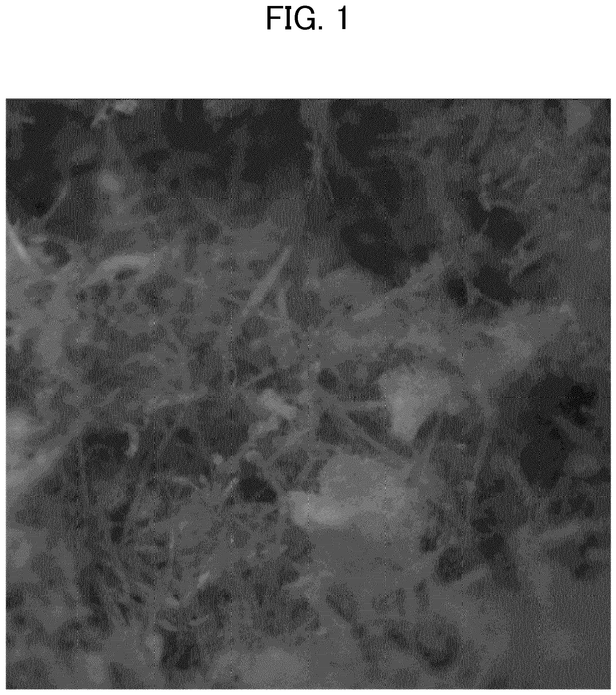

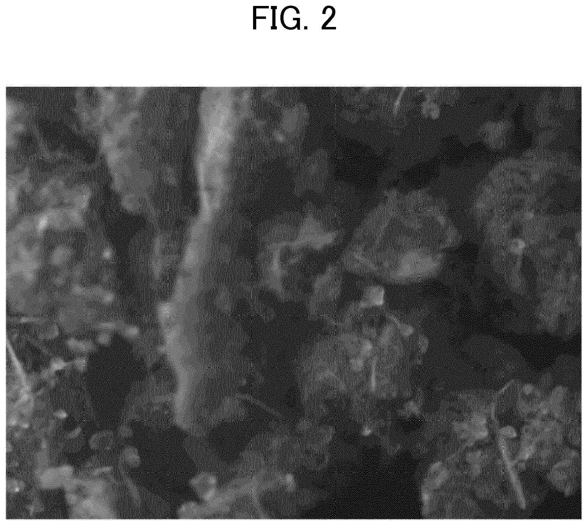

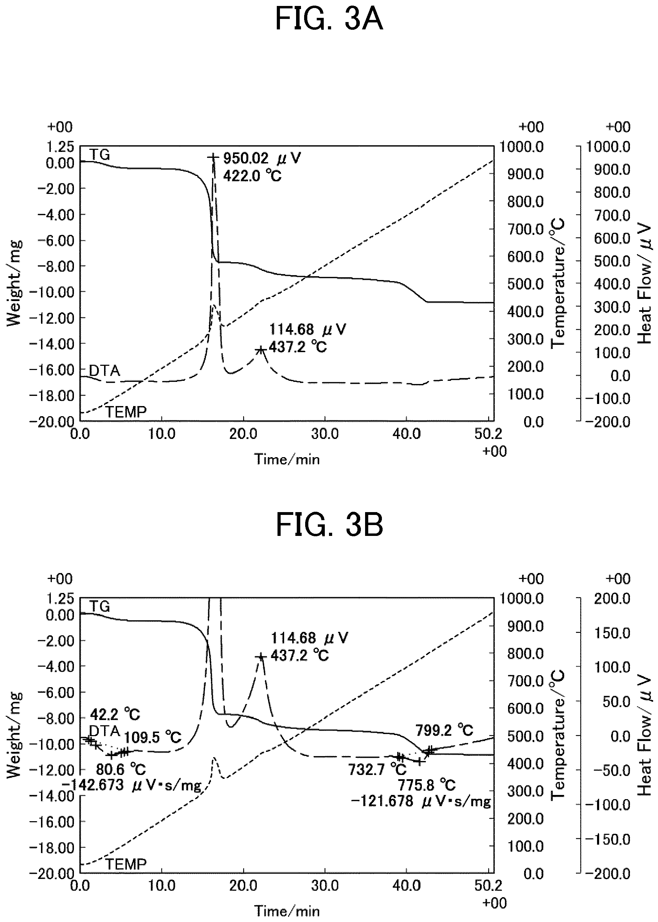

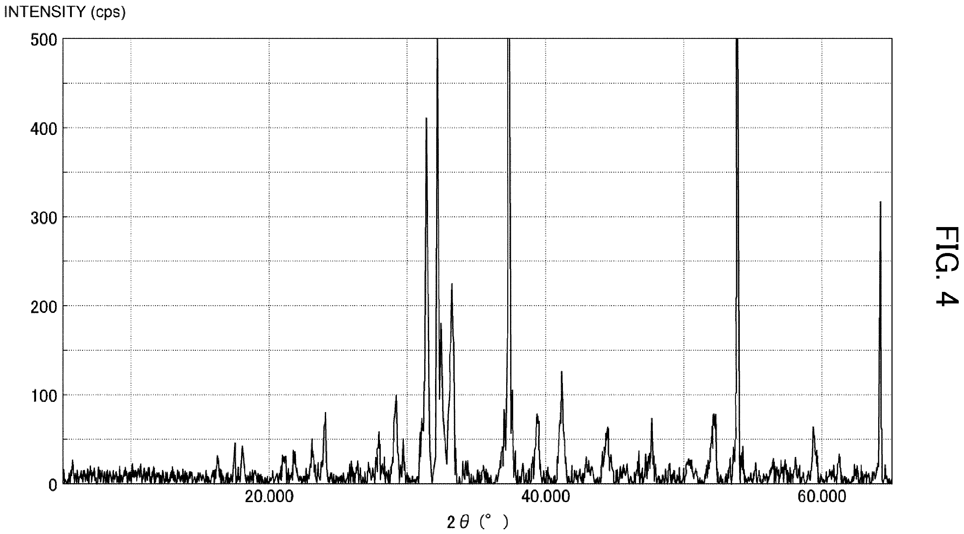

FIG. 1 is a photograph showing an agent for decreasing the fluidity according to the present invention. FIG. 2 is a photograph showing a state in which soil microparticles are captured by voids formed by entangled fibers with regard to the agent for decreasing the fluidity according to the present invention. FIGs. 3A and 3B are graphs showing the results of thermogravimetry · differential analysis of the agent for decreasing the fluidity according to the present invention. FIG. 4 is a graph showing the results of X ray diffraction analysis of ignition ash of the agent for decreasing the fluidity according to the present invention.

### PREFERRED MODE FOR CARRYING OUT THE INVENTION

### [Agent for decreasing fluidity of solid-liquid mixture]

One embodiment of the agent for decreasing the fluidity according to the present invention is an agent for decreasing the fluidity of a solid-liquid mixture, which is a granular material having a structure formed by entangled fibers in which the granular material has an average particle diameter of 300 µm or less and a specific surface area of 0.25 m²/g or more and 100 m²/g or less as measured by a BET method. Furthermore, another embodiment of the agent for decreasing the fluidity according to the present invention is an agent for decreasing the fluidity of a solid-liquid mixture, which is a granular material having a structure formed by entangled fibers in which the granular material has a porosity of 50% or more as calculated in accordance with the formula: (1 - (bulk density)/(true density)) × 100 and a specific surface area of 0.25 m²/g or more and 100 m²/g or less as measured by a BET method. According to this another embodiment, the average particle diameter of a granular material may be 300 µm or less. Furthermore, in the present specification, the average particle diameter indicates an average value of particle diameter of the granular materials observed under an optical microscope.

The aforementioned fiber is not particularly limited, and examples thereof include a fiber containing a hydrophilic polymer. As the fiber contains a hydrophilic polymer, when water is included in the liquid phase of the solid-liquid mixture, affinity between the fiber and the liquid phase is enhanced and the liquid phase is more easily captured by the agent for decreasing the fluidity, and thus the degree of fluidity decrease of the solid-liquid mixture is more easily increased. The hydrophilic polymer is not particularly limited, and examples thereof include cellulose, polyvinyl alcohol, polyalkylene glycol (for example, polyethylene glycol and polypropylene glycol), and polyacrylic acid, and from the viewpoint of having biodegradability and pH in neutral range (for example, around pH 8) and also an excellent low environmental loading property, cellulose is preferable.

In a case in which the fiber contains a hydrophilic polymer, content of the hydrophilic polymer in the agent for decreasing the fluidity according to the present invention is preferably 40% by weight or more, more preferably 45% by weight or more, and even more preferably 47% by weight or more. As the content is 40% by weight or more, when water is contained in the liquid phase of the solid-liquid mixture, affinity between the fiber and the liquid phase is enhanced and the liquid phase is more easily captured by the agent for decreasing the fluidity, and thus the degree of fluidity decrease of the solid-liquid mixture is more easily increased. The upper limit of the content may be 100% by weight, but, when the degree of fluidity decrease of a solid-liquid mixture or the like is considered, the upper limit of the content is preferably 80% by weight or less, more preferably 60% by weight or less, and even more preferably 57% by weight or less.

The agent for decreasing the fluidity according to the present invention may be used with, as an optional component, an inorganic filler such as calcium carbonate (CaCO₃), kaolin (Al₄Si₄O₁₀(OH)₈), or talc (Mg₃Si₄O₁₀(OH)₂) as long as the purpose of the present invention is not impaired.

The solid-liquid mixture is not particularly limited, and examples thereof include mud. Content of the liquid phase in the solid-liquid mixture is not particularly limited, and it is typically 20 to 90% by weight, more typically 30 to 75% by weight, even more typically 40 to 60% by weight, and particularly typically 45 to 55% by weight. The mud may have cone index qc of less than 400 (kN/m²), and specifically, it may be 350 (kN/m²) or less, 300 (kN/m²) or less, 250 (kN/m²) or less, 200 (kN/m²) or less, 175 (kN/m²) or less, 150 (kN/m²) or less, 125 (kN/m²) or less, 100 (kN/m²) or less, 75 (kN/m²) or less, or 60 (kN/m²) or less. Lower limit of the cone index qc of mud may be 10 (kN/m²) or so, although it is not particularly limited.

The method for producing the agent for decreasing the fluidity according to the present invention is not particularly limited, and a method including milling material pieces by a mill can be mentioned, for example. Examples of the material pieces include those capable of forming a fiber according to milling by a mill, and more specific examples thereof include shredder scrap, paper pieces including used paper, or the like. According to this method, a granular material having a structure formed by entangled fibers is formed.

Hereinbelow, the agent for decreasing the fluidity is described in accordance with the following properties that are exhibited by the agent for decreasing the fluidity according to the present invention.
(1) Instantaneous property
(2) Operational simplicity
(3) Universality
(4) Low volume increase rate

### (1) Instantaneous property

Conventional approaches are approaches which are based on solidification occurring in accordance with a chemical reaction such as hydration that is mainly involved with a cement-based solidifying agent, and it requires a reaction time, i.e., "aging period". On the other hand, the agent for decreasing the fluidity according to the present invention has the physical liquid absorption as a main mechanism, and it does not require any reaction time. As a result, it is possible to shorten the time from an occurrence of a solid-liquid mixture with high fluidity such as sludge having high water retention rate to completion of a treatment (achievement of low-fluidity mixture).

The granular material constituting the agent for decreasing the fluidity according to the present invention has a structure formed by entangled fibers, and as shown in Examples, the structure exhibits a cotton-like shape. This cotton-like structure has many voids having an interconnecting property, and when the agent for decreasing the fluidity is added to a solid-liquid mixture having high liquid retention rate such as sludge and water or fine particles constituting the sludge infiltrate the voids, an internal pressure is unlikely to work thereon. As a result, exchange between the air filling the voids and water or fine particles progresses rapidly. Accordingly, air filled in the interconnecting voids in a cotton-like structure of the agent for decreasing the fluidity is converted into extremely small air (bubble) by the water or fine particles, and together with the air, the water or fine particles are physically restrained to the interconnecting voids.

Accordingly, the free movement of the solid-liquid mixture having high water retention rate such as sludge, which used to have a liquid property, is restrained by the fiber structure, and after addition and stirring of the agent for decreasing the fluidity (dispersing of the agent for decreasing the fluidity in solid-liquid mixture), plasticity is caused immediately. Furthermore, when the main body of the fiber constituting the agent for decreasing the fluidity is a hydrophilic polymer like cellulose and the liquid phase of the solid-liquid mixture contains water, since the hydrophilic polymer has many hydrophilic groups on the molecular side chain, an electric attractive force is exhibited between the water molecule and fibers constituting the voids, thus contributing to the difficulty (restraining force) of losing water which has infiltrated the interconnecting voids.

Furthermore, according to one embodiment, the granular material constituting the agent for decreasing the fluidity has an extremely small average particle diameter of 300 µm or less. It contributes to the dispersion level of the agent for decreasing the fluidity when the agent for decreasing the fluidity is added to a solid-liquid mixture and stirred therein, and, along with the aforementioned physical restraining mechanism, also contributes to the instantaneous property. From the viewpoint of the dispersion property above, the average particle diameter is preferably 250 µm or less, and more preferably 200 µm or less. Furthermore, lower limit of the average particle diameter is, although not particularly limited, typically 3 µm or more, and more typically 50 µm or more.

Incidentally, the specific surface area of the granular material constituting the agent for decreasing the fluidity is 0.25 m²/g or more and 100 m²/g or less as measured by a BET method. The fiber constituting the agent for decreasing the fluidity itself has fine voids, but compared to silica gel (specific surface area as measured by a BET method: about 500 m²/g) used for an absorbent material or the like, or activated carbon (specific surface area as measured by a BET method: about 1000 m²/g) used for adsorption or the like, it has a smaller specific surface area as measured by BET method. This means that, while the silica gel or activated carbon has many voids (fine pores) of angstrom order in the material, the fiber constituting the granule of the granular material itself has not so many fine pores of angstrom order. Considering that those fine pores exhibit a great influence on the gas adsorption property whereas the influence of the fine pores is not so high for liquid absorption, particularly, for a short period of time, the aforementioned measurement value of the specific surface area of the agent for decreasing the fluidity supports the instant liquid absorption principle which has, as a main principle, the physical restraining mechanism based on interconnecting voids resulting from entangling among fibers which constitute the agent for decreasing the fluidity.

The specific surface area of the granular material constituting the agent for decreasing the fluidity as measured by a BET method is, from the viewpoint of the liquid absorbing property by the agent for decreasing the fluidity, preferably 0.25 m²/g or more and 100 m²/g or less, more preferably 0.5 m²/g or more and 10 m²/g or less, even more preferably 0.75 m²/g or more and 5 m²/g or less, and particularly more preferably 1 m²/g or more and 2 m²/g or less.

### (2) Operational simplicity

As the solid-liquid mixture having a liquid property is induced to have plasticity according to liquid absorption caused by the physical restraining as described above, with regard to the agent for decreasing the fluidity according to the present invention, the operation required for a treatment is just addition of the agent for decreasing the fluidity to a solid-liquid mixture, and stirring. As such, complex order, operation, and items for determination like addition of plural chemicals, addition order involved with the addition of plural chemicals, balance in blending amounts, or the like are not required, and the operation is simple so that anybody can perform.

Furthermore, in the case of the physical restraining mechanism, in-advance examination of a chemical composition of a solid-liquid mixture as a subject for improvement is not required, and, as the effect can be immediately determined in accordance with addition and stirring, an examination is not necessary before the operation even for the liquid retention rate which requires time for measurement and according to onsite sampling of a solid-liquid mixture and adding and stirring of the agent for decreasing the fluidity in small portions, the addition ratio exhibiting the desired plasticity can be simply decided.

### (3) Universality

Since the solid-liquid mixture having a liquid property is induced to have plasticity according to the liquid absorption caused by physical restraining as described above, the agent for decreasing the fluidity according to the present invention can be used regardless of the chemical composition of the solid-liquid mixture as a subject for improvement. The solid phase of the solid-liquid mixture may be either an inorganic material or an organic material, for example. Furthermore, the liquid phase of the solid-liquid mixture may be any of water, an organic solvent, and a solution. In the case of a solution, a solute like electrolyte, concentration and type of ions, or the like does not matter.

### (4) Low volume increase rate

The granular material constituting the agent for decreasing the fluidity according to the present invention has voids as described above. Those voids are interconnecting voids based on entangling among fibers which constitute the agent for decreasing the fluidity, fine voids present in the fiber itself, and intergranular voids. In one embodiment, the granular material constituting the agent for decreasing the fluidity according to the present invention has a porosity of 50% or more as calculated in accordance with the formula: (1 - (bulk density)/(true density)) × 100. The porosity is, from the viewpoint of the liquid absorbing property by the agent for decreasing the fluidity, preferably 60% or more, more preferably 70% or more, even more preferably 80% or more, and particularly preferably 85% or more. Upper limit of the porosity is, from the viewpoint of the strength or the like of the agent for decreasing the fluidity, preferably 95% or less, more preferably 93% or less, even more preferably 91% or less, and particularly preferably 89% or less.

Furthermore, in the present specification, the bulk density is calculated from, after filling a container having a certain volume with the agent for decreasing the fluidity, internal volume and weight of a granular material constituting the filled agent for decreasing the fluidity without applying a load from above, in particular.

Herein, it is shown in Example 2 that, when mud having water content ratio of 48% by weight is improved to have cone index of 200 kN/m² or higher, i.e., cone index of "fourth-class treated soil" as one quality category prescribed in "Technical standard for using treated soil of construction mud", the agent for decreasing the fluidity needs to be added in an amount of 25 kg per 1 m³. Considering that the true density of the granular material constituting the agent for decreasing the fluidity, which is used in Example 2, is 1.9 g/cm³, volume of the granular material constituting the agent for decreasing the fluidity which is added in Example 2 is as follows: 25 × 1000/(1.9 × 100 × 100 × 100) ≈ 0.013 m³. Namely, the volume increase rate caused by constitutional fibers or the like after adding the agent for decreasing the fluidity in Example 2 can be calculated to be 1% or so. Compared to a solidification method which involves production of a hydrate based on hydration reaction of a cement-based solidifying material or the like and a plasticizing approach based on high-molecular polymer system which expands by taking water into the molecule, the above volume increase rate is very small.

Furthermore, the physical restraining to interconnecting voids that are constituted by entangling of fibers constituting the granular material has a constant water-retaining force while the water restrained by celldoron can be extruded by a physical action like compression or the like. Thus, as the handlability can be improved for unloading construction sludge or the like and volume reduction and weight reduction of sludge or the like can be easily carried out by having physical dehydration like compression, compared to a method for volume reduction and a method for weight reduction of a related art using high temperature calcination furnace or the like, the volume reduction and weight reduction can be achieved at low cost.

### (5) Low environmental loading property

The low environmental loading property is described for a case in which the fibers constituting the agent for decreasing the fluidity according to the present invention contain cellulose. Cellulose is degraded by cellulase, and as it is degraded by fungi or the like that are present in soil, the agent for decreasing the fluidity added to an environment is converted to original soil over time. Furthermore, according to addition of a degrading enzyme like cellulase, this biodegradability enables release of water or fine particles, which are physically restrained by the agent for decreasing the fluidity, from the restrain. Furthermore, from the viewpoint that pH of the agent for decreasing the fluidity is in a neutral range (around pH 8), and as pH of the soil after the addition of the agent for decreasing the fluidity remains within a neural range, it has little influence over farmland or neighboring vegetation.

### [Method for producing low-fluidity mixture]

The method for producing a low-fluidity mixture according to the present invention includes mixing a solid-liquid mixture with the agent for decreasing the fluidity according to the present invention to obtain a low-fluidity mixture. The mixing method is not particularly limited, and a well-known method may be used. The amount of the agent for decreasing the fluidity to be mixed with a solid-liquid mixture is not particularly limited, and from the viewpoint of the degree of fluidity decrease of a solid-liquid mixture or the like, it is, for example, 1.5 parts by weight or more, preferably 3 parts by weight or more, more preferably 4.5 parts by weight or more, and even more preferably 9 parts by weight or more relative to 100 parts by weight of the solid-liquid mixture. Furthermore, the upper limit of the above amount is not particularly limited, and from the viewpoint of easy prevention of the volume increase or the like, it is, for example, 50 parts by weight or less, preferably 30 parts by weight or less, more preferably 20 parts by weight or less, and even more preferably 15 parts by weight or less relative to 100 parts by weight of the solid-liquid mixture.

As described above, according to the agent for decreasing the fluidity that is used in the present invention, a volume increase before and after the mixing is unlikely to occur. Thus, according to the method for producing a low-fluidity mixture of the present invention, it is preferable that the solid-liquid mixture is mixed in an amount of 50% by volume or more but less than 100% by volume relative to the target loading volume of a low-fluidity mixture into a container, and the total volume of the use amount of the solid-liquid mixture and the agent for decreasing the fluidity exceeds the target loading volume of a low-fluidity mixture into a container.

Use amount of the solid-liquid mixture is, relative to the target loading volume, preferably 60% by volume or more, and more preferably 70% by volume or more, 80% by volume or more, 85% by volume or more, 90% by volume or more, 95% by volume or more, or 97% by volume or more. Furthermore, use amount of the solid-liquid mixture may be 99.9% by volume or less, 99.5% by volume or less, 99% by volume or less, 95% by volume or less, or 90% by volume or less relative to the target loading volume, considering a slight volume increase after the mixing. Furthermore, the target loading volume of a low-fluidity mixture into a container may be a variable value which needs to be set for each use, or set at a constant value for each container from the viewpoint of safety or the like, or a fixed value that is the same as the maximum volume of each container.

Furthermore, from the viewpoint of the prevention of a volume increase after the mixing, the total volume of the use amount of the solid-liquid mixture and the agent for decreasing the fluidity may be 101% by volume or more, or it is preferably 102% by volume or more, 103% by volume or more, 108% by volume or more, 110% by volume or more, or 115% by volume or more relative to the target loading volume of the low-fluidity mixture into a container. Incidentally, the aforementioned total volume may be less than 200% by volume, or specifically, it may be 190% by volume or less, 175% by volume or less, 150% by volume or less, 140% by volume or less, 130% by volume or less, or 120% by volume or less relative to the target loading volume of the low-fluidity mixture into a container. Furthermore, the aforementioned amount is preferable from the viewpoint of the efficiency of the process for producing a low-fluidity mixture using one container, but in the present invention, the total volume of the use amount of the solid-liquid mixture and the agent for decreasing the fluidity may be an amount of 101% by volume or less of the target loading volume.

Furthermore, the mixing can be carried out in a closed space or a space with constant volume of a container. According to the present invention, even when the mixing is carried out in a closed space or a space with constant volume, container breakage caused by a significant volume increase is easily prevented. Furthermore, because the mixing in a closed space or a space with constant volume generally has poor operability compared to mixing in an open space, there is a problem that it is difficult to achieve sufficient mixing or to confirm the sufficient mixing, but the aforementioned problem can be solved by the present invention since the agent for decreasing the fluidity which is also excellent in terms of the instantaneous property, operational simplicity, and universality is used. From the same point of view, the mixing may be carried out by using a container on a vehicle for transporting powder particle. Furthermore, at the time of the mixing, the closed space or space with constant volume may be closed or have a constant volume, and it also encompasses a container space that can be reversibly open or have a variable volume. Meanwhile, in the present invention, a container with an open space may be used.

The cone index qc of a low-fluidity mixture that is obtained by the method of one embodiment of the present invention by using mud is, although not particularly limited, preferably higher by 50 (kN/m²) or more than the cone index qc of mud, and specifically, it may be higher by 75 (kN/m²) or more, 100 (kN/m²) or more, 125 (kN/m²) or more, 140 (kN/m²) or more, 175 (kN/m²) or more, 200 (kN/m²) or more, 250 (kN/m²) or more, 300 (kN/m²) or more, 400 (kN/m²) or more, 500 (kN/m²) or more, 600 (kN/m²) or more, 700 (kN/m²) or more, 800 (kN/m²) or more, 900 (kN/m²) or more, or 1000 (kN/m²) or more than that.

The low-fluidity mixture produced by the aforementioned method may be used, either directly or after undergoing an additional stabilization treatment (for example, calcination treatment or addition of solidifying agent) (for example, on improved mud, construction, or the like), or it may be also discarded.

### [Method for conveying low-fluidity mixture]

The method for conveying a low-fluidity mixture according to the present invention includes moving a low-fluidity mixture, which is obtained by the method for producing a low-fluidity mixture according to the present invention, by using a moving body. Examples of the moving body include a vehicle for transporting powder particle and a dump truck. The conveyed low-fluidity mixture may be used for construction or the like or discarded on a site after the movement.

### [Method for enhancing degree of fluidity decrease of solid-liquid mixture]

Another embodiment of the present invention is a method for increasing the degree of fluidity decrease of a solid-liquid mixture by infiltrating and capturing a solid phase and a liquid phase of the solid-liquid mixture in voids that are formed by entangled fibers. For this method, the agent for decreasing the fluidity according to the present invention can be used, for example. That is because, the granular material constituting the agent for decreasing the fluidity has voids that are formed by entangled fibers and the solid phase and the liquid phase of the solid-liquid mixture are captured in the voids as they infiltrate thereto.

### [Method for increasing degree of freedom of chemical composition of solid-liquid mixture to become subject for decreasing fluidity]

Another embodiment of the present invention is a method for increasing the degree of freedom of a chemical composition of a solid-liquid mixture as a subject for decreasing the fluidity by infiltrating and capturing a solid phase and a liquid phase of the solid-liquid mixture in voids that are formed by entangled fibers. For this method, the agent for decreasing the fluidity according to the present invention can be used, for example. As described above, the agent for decreasing the fluidity according to the present invention can be used regardless of the chemical composition of the solid-liquid mixture, and it can increase the degree of freedom of the chemical composition of the solid-liquid mixture, which becomes a subject for decreasing the fluidity.

### [Method for preventing volume increase of solid-liquid mixture after decreasing fluidity]

Still another embodiment of the present invention is a method for preventing a volume increase of a solid-liquid mixture after decreasing the fluidity by infiltrating and capturing a solid phase and a liquid phase of the solid-liquid mixture in voids that are formed by entangled fibers. For this method, the agent for decreasing the fluidity according to the present invention can be used, for example. As described above, the agent for decreasing the fluidity according to the present invention can prevent the volume increase of a solid-liquid mixture after decreasing the fluidity.

### EXAMPLES

Hereinbelow, the present invention is described more specifically by expressing Examples, but the scope of the present invention is not limited to those Examples.

### [Example 1: Preparation of agent for decreasing fluidity]

Shredder scrap (specific surface area of 0.23 m²/g as measured by BET method) was milled by a mill to obtain an agent for decreasing the fluidity which consists of a granular material having average particle diameter of 200 µm and specific surface area of 1.6 m²/g as measured by a BET method. As a result of observing the granular material under an optical microscope, it was found to have a structure formed by entangled fibers in which the structure exhibited a cotton-like shape (FIG. 1). True density of the granular material was measured by a dry type densitometer manufactured by SHIMADZU CORPORATION, and it was found to be 1.9 g/cm³. Furthermore, bulk density of the granular material was 0.25 g/cm³. As such, the granular material had porosity as follows: (1 - 0.25/1.9) × 100 ≈ 87%.

### [Examples 2 to 5 and Comparative Example 1: Mixing of agent for decreasing fluidity with mud]

Mud with water content ratio of 48% by weight and the agent for decreasing the fluidity obtained from Example 1 were mixed with each other according to the weight shown in Table 1. The soil after the mixing was subjected to cone index measurement based on JIS A 1228. The results are shown Table 1. Furthermore, the ratio described in Table 1 indicates the weight ratio of the agent for decreasing the fluidity relative to the mud.

**[Table 1]**

| | Mud (Cohesive soil, volume of 1 m³) (kg) | Agent for decreasing fluidity (kg) | Ratio (% by weight) | Cone index (kN/m²) |
|---|---|---|---|---|
| Comparative Example 1 | 1,600 | 0 | 0.0 | 189 |
| Example 2 | 1,600 | 25 | 1.6 | 206 |
| Example 3 | 1,600 | 50 | 3.1 | 399 |
| Example 4 | 1,600 | 75 | 4.7 | 868 |
| Example 5 | 1,600 | 150 | 9.4 | 2,363 |

As it is evident from Table 1, by mixing the mud with water content ratio of 48% by weight with the agent for decreasing the fluidity in an amount of 1.6% by weight or more, the cone index range of 200 kN/m² or higher, i.e., cone index of "fourth-class treated soil" as one quality category prescribed in "Technical standard for using treated soil of construction mud", was satisfied so that it was possible to decrease the fluidity of the mud.

A state obtained after mixing the mud with water content ratio of 60% by weight with the agent for decreasing the fluidity in an amount of 10% by weight is shown in FIG. 2. As shown in FIG. 2, the soil microparticles were captured in voids of the cotton-like structure having entangled fibers in the agent for decreasing the fluidity. Furthermore, for taking a photograph, the moisture had been evaporated by drying.

### [Example 6, Comparative Example 2, and Reference Example 1: Degradation test using cellulase]

For the degradation test using cellulase, the following samples were used. Example 6: The agent for decreasing the fluidity obtained in Example 1
Comparative Example 2: Shredder scrap which had been used for obtaining the agent for decreasing the fluidity in Example 1
Reference Example 1: Cellulose Microcrystalline (manufactured by Merck & Co., Inc.)

The cellulase preparation (trade name: Cellulase SS, manufactured by Nagase ChemteX Corporation) was diluted with 0.1 M acetate buffer (pH 5.5) to have concentration of 1/50, and thus a diluted enzyme solution was prepared. To 0.5 ml of this diluted enzyme solution, the sample was added in an amount of 25 mg followed by stirring. At that time, it was observed by a naked eye that not any one of the samples is slightly dissolved. After that, incubation for 24 hours at 40°C was carried out. At Hour 0 and Hour 24 from the incubation, the reaction solution was centrifuged (7,000×g, 5 minutes) and the supernatant was recovered. The supernatant was boiled for 5 minutes to terminate the reaction. The amount of glucose contained in the supernatant was measured by using Glucose Test Wako CII (manufactured by Wako Pure Chemical Industries, Ltd.). The results are shown in Table 2.

**[Table 2]**

| | Reaction time | Glucose concentration at each reaction time (mg/0.5ml) | Concentration of freed glucose at hour 24 (mg/0.5ml) |
|---|---|---|---|
| Example 6 | Hour 0 | 0.06 | 3.17 |
| | Hour 24 | 3.22 | |
| Comparative Example 2 | Hour 0 | 0.05 | 1.99 |
| | Hour 24 | 2.03 | |
| Reference Example 1 | Hour 0 | 0.04 | 4.44 |
| | Hour 24 | 4.48 | |

As it is evident from Table 2, compared to the shredder scrap of Comparative Example 2, the agent for decreasing the fluidity according to the present invention can be efficiently degraded by cellulase, and thus the agent was confirmed to have good biodegradability.

### [Example 7: Measurement of pH]

10 g of the sample obtained by mixing the mud with the agent for decreasing the fluidity in Example 3 was collected in a glass container, added with 25 ml of pure water, and after performing stirring, allowed to stand for 1 hour. The soil suspension after the standing was briefly stirred and pH was measured by a glass electrode method. Furthermore, for the test method, reference was made to 1. pH (H₂O) of pH (Glass electrode method), Chapter V. Soil Chemistry of "Method for analysis of soil environment" edited by Japanese Society of Soil Science and Plant Nutrition.

### [Example 8: Analysis of physical properties of agent for decreasing fluidity]

### 1. Items for analysis

For the agent for decreasing the fluidity obtained from Example 1, the following analysis was carried out.
(1) Ignition loss (hereinbelow, also referred to as ig-Loss)
(2) Thermogravimetry · differential analysis (hereinbelow, also referred to as TG-DTA)
(3) X ray diffraction analysis (hereinbelow, also referred to as XRD) of ignition ash

### 2. Method for analysis

### (1) ig-Loss

In a magnetic crucible, about 8 g of the agent for decreasing the fluidity was precisely weighed to the level of 1/100 g, and after placing it in an electric furnace, heated to 1,000°C for about 2 hours followed by keeping for 1 hour. After that, the magnetic crucible was gradually cooled to 100°C or so inside the furnace, and then taken out from the furnace and placed in a desiccator. After cooling to room temperature, it was quickly weighed. Because the agent for decreasing the fluidity is expected to have a great loss, the measurement was carried out 3 times. The ignition loss was obtained based on the following formula. Ignition loss = (Weight before heating - Weight after heating)/Weight before heating

### (2) TG-DTA

TG-DTA is a method of examining, based on an exothermic and endothermic behavior and a weight change, a state in which a chemical change (including combustion) of a material is caused by heating. TG-DTA was measured for the agent for decreasing the fluidity obtained from Example 1 by using Thermo Plus EVO2 differential thermal balance TG8121 that is manufactured by Rigaku Corporation. Furthermore, the measurement conditions were sample weight of 15 mg, measurement temperature range of 20 to 950°C, and temperature increase rate of 20°C/minute.

### (3) XRD

XRD is an analysis method by which qualification and quantification of a material is carried out by utilizing that each material has a unique crystal structure. The ash produced by ig-Loss of above (1) was pulverized using a pestle and mortar, and the ash obtained from the pulverization using a pestle and mortar was pulverized using a pestle and mortar, and then filled in a holder for XRD measurement. For the measurement, smart lab manufactured by Rigaku Corporation was used. The measurement conditions were the following; goniometer: MultiFlex+ goniometer, X ray: CuKα, 40 kV/30 mA, scanning mode: continuous mode, scan speed: 2.0°/minute, and scanning range: 2θ = 5 to 65°.

### 3. Results of Analysis

### (1) ig-Loss

The results are shown in Table 3.

**[Table 3]**

| | Ignition loss |
|---|---|
| First | 73.68% |
| Second | 73.74% |
| Third | 73.74% |
| Average | 73.72% |

### (2) TG-DTA

The results are shown in FIGs. 3A and 3B. In the figures, the line indicated by "TEMP" represents the heating temperature, the line indicated by "TG" represents the weight change (TG curve), and the line indicated by "DTA" represents the exothermic and endothermic reactions (DTA curve). Furthermore, FIG. 3B is obtained by modifying the drawing scale of the DTA curve in FIG. 3A.

### (3) XRD

The results are shown in FIG. 4.

### 4. Discussion

### (1) ig-Loss

There was almost no deviation among the measurement of three times, and ig-Loss was about 74%. It is considered that, according to the ignition, the organic components were combusted and lost whereas the filler and other inorganic mixture remained as ash. Details are discussed in the following TG-DTA and XRD sections.

**[Table 4]**

| Event | Ratio | Materials |
|---|---|---|
| Lost before reaching 1000°C | 73.72% | Adsorbed water, cellulose, other organic materials, crystal water or carbonate components of filler |
| Remained at 1000°C | 26.28% | Filler residues, inorganic mixed materials |

### (2) TG-DTA

Presence of a gentle endothermic peak at room temperature to 100°C and a slight descend of the TG curve at the same temperatures (weight reduction) indicates that the moisture adsorbed on the agent for decreasing the fluidity has evaporated. When it is read from the measurement value, the weight ratio of the adsorbed water which has been contained in the agent for decreasing the fluidity was about 3%.

Next, it was found that, when heating at 250 to 350°C is carried out, a huge exothermic peak is shown from the DTA curve and the TG curve showed a significant plunge at the same temperatures, indicating weight reduction. This means that cellulose is combusted to degrade into water vapor and carbon dioxide, and then released to air (due to excessively high amount of generated heat, heating control was impossible so that the line indicated by "TEMP" also showed an increase). The weight reduction was about 49% at that time.

Upon the completion of the cellulose combustion, a slightly gentle exothermic peak was shown at 350 to 570°C. When it is assumed that the heat generation at this temperature is derived from the materials that are expected to be contained in the agent for decreasing the fluidity, there is a possibility of lignin, ink carbon, or non-combusted carbon remained after combustion at 300 to 350°C. Wooden fibers contain a large amount of hemicelluloses and lignin other than cellulose, but lignin is removed as much as possible during paper-making process as it is viscous and becomes a cause of discoloration, and thus the content thereof is very small. As such, it is considered to be the combustion of non-combusted carbon of cellulose and/or printed carbon. The weight reduction at that point was about 7% according to the measured value.

A gentle endothermic peak was shown at 700°C to 800°C, and weight reduction was also shown at the same temperatures. This is understood as a phenomenon in which calcium carbonate of the filler contained in the agent for decreasing the fluidity undergoes a decarboxylation reaction. The reduced amount of this decarboxylation was about 12%.

Furthermore, for a paper-making process, a filler is used for various purposes. Examples of a filler that is generally used include calcium carbonate (CaCO₃), kaolin (Al₄Si₄O₁₀(OH)₈), and talc (Mg₃Si₄O₁₀(OH)₂). There is a high possibility that a filler other than calcium carbonate is also included in the agent for decreasing the fluidity. As the thermal decomposition of calcium carbonate (reaction formula: CaCO₃+ΔH → CaO+CO₂, ΔH is calorie) is at 700°C or higher and also has a high weight reduction amount (theoretical value of 44%), it can be clearly detected (although there are reports indicating that the thermal decomposition of calcium carbonate occurs at 600°C or so, or data indicating the occurrence near 900°C, depending on literatures, it is however 700 to 800°C according to the present measurement conditions). Meanwhile, because the thermal decomposition of kaolin or talc (in those cases, dehydration reaction of crystal water) is broad at temperatures of 350 to 650°C and the weight reduction amount is as small as 10 to 14%, it is overlapped with the combustion reaction of cellulose, and thus difficult to detect by TG-DTA.

The above can be summarized as Table 5.

**[Table 5]**

| Heating temperature | TG-DTA | Phenomenon | Weight change |
|---|---|---|---|
| Room temperature to 110°C | - Endothermic reaction (small) | - Evaporation of adsorbed water | 3.52% |
| | - Weight reduction (small) | | |
| 250 to 350°C | - Exothermic reaction (large) | - Combustion of cellulose | 48.18% |
| | - Weight reduction (large) | | |
| 350 to 570°C | - Exothermic reaction (medium) | - Combustion of ink components | 7.75% |
| | - Weight reduction (small) | - Combustion of non-combusted carbon | |
| | | ? Combustion of lignin | |
| | | ? Dehydration of filler (clay component) (<-Endothermic reaction) | |
| 700 to 800°C | - Endothermic reaction (small) | - Decarboxylation reaction of filler (calcium carbonate) | 12.67% |
| | - Weight reduction (medium) | | |
| up to 950°C | | | Total weight reduction 72.12% |

The total weight reduction obtained by TG-DTA (heated up to 950°C) was 72.12%, which almost corresponds to the ignition loss of 73.72% of (1) above (heated up to 1000°C). Furthermore, the cellulose content contained in the agent for decreasing the fluidity was about 48 to 56%.

Furthermore, the weight reduction of the agent for decreasing the fluidity at 575°C, which is the ashing temperature prescribed in JIS P 8251:2002, was 61.84% (with the proviso that the weight reduction amount of adsorbed water is also included in this value).

### (3) XRD

From the XRD pattern shown in FIG. 4, it is believed that calcium oxide (CaO), gehlenite (Ca₂Al(AlSi)O₇), magnetite (iron oxide, Fe₂O₃), and calcium hydroxide (Ca(OH)₂) are contained in the ash. When it is assumed based on the height of the detection peak, the amount contained in the ash is as follows: calcium oxide > gehlenite >> magnetite > calcium hydroxide.

Calcium oxide is a material generated by decarboxylation that is caused by ignition of calcium carbonate in filler, and it is contained in the largest amount in the ash. Furthermore, calcium hydroxide detected with a trace amount is a reaction product of calcium oxide in the sample with moisture in air during the measurement. In addition, gehlenite considered to be generated by dehydration and recrystallization of a clay-based filler like kaolin was contained. The main component of the ash included those two types, and it was found that they originate from a filler.

Furthermore, magnetite was also observed, although it was a small amount. There is a possibility that it has originated from a stapler, abrasion of a milling wing, ink components, or the like.

## Claims

1. An agent for decreasing the fluidity of a solid-liquid mixture, which is a granular material having a structure formed by entangled fibers in which the granular material has an average particle diameter of 300 µm or less and a specific surface area of 0.25 m²/g or more and 100 m²/g or less as measured by a BET method.

2. An agent for decreasing the fluidity of a solid-liquid mixture, which is a granular material having a structure formed by entangled fibers in which the granular material has a porosity of 50% or more as calculated in accordance with the formula: (1 - (bulk density)/(true density)) × 100 and a specific surface area of 0.25 m²/g or more and 100 m²/g or less as measured by a BET method.

3. The agent for decreasing the fluidity according to claim 2, wherein the agent has an average particle diameter of 300 µm or less.

4. The agent for decreasing the fluidity according to any one of claims 1 to 3, wherein the fibers contain a hydrophilic polymer.

5. The agent for decreasing the fluidity according to claim 4, wherein the hydrophilic polymer is cellulose.

6. The agent for decreasing the fluidity according to claim 4 or 5, wherein content of the hydrophilic polymer in the agent for decreasing the fluidity is 40% by weight or more.

7. The agent for decreasing the fluidity according to any one of claims 1 to 6, wherein the solid-liquid mixture is mud.

8. A method for producing a low-fluidity mixture comprising mixing a solid-liquid mixture with the agent for decreasing the fluidity according to any one of claims 1 to 6 to obtain a low-fluidity mixture.

9. The method according to claim 8, wherein the method includes mixing the solid-liquid mixture with the agent for decreasing the fluidity in a container to obtain a low-fluidity mixture, and
the solid-liquid mixture is mixed in an amount of 50% by volume or more but less than 100% by volume relative to a target loading volume of the low-fluidity mixture into the container and total volume of a use amount of the solid-liquid mixture and the agent for decreasing the fluidity exceeds the target loading volume of the low-fluidity mixture into the container.

10. The method according to claim 9, wherein the mixing is carried out in a closed space or a space with constant volume of the container.

11. The method according to claim 9 or 10, wherein the mixing is carried out by using the container on a vehicle for transporting powder particle.

12. The method according to any one of claims 8 to 11, wherein the solid-liquid mixture is mud.

13. A method for conveying a low-fluidity mixture comprising moving a low-fluidity mixture obtained by the method according to any one of claims 8 to 12 after loading the low-fluidity mixture on a moving body.

14. A method for increasing the degree of fluidity decrease of a solid-liquid mixture by dispersing, in a solid-liquid mixture, a granular material having interconnecting voids in a cotton-like structure formed by entangled fibers, and infiltrating and capturing a solid phase and a liquid phase of the solid-liquid mixture in the interconnecting voids.

15. A method for increasing the degree of freedom of a chemical composition of a solid-liquid mixture as a subject for decreasing the fluidity by dispersing, in a solid-liquid mixture, a granular material having interconnecting voids in a cotton-like structure formed by entangled fibers, and infiltrating and capturing a solid phase and a liquid phase of the solid-liquid mixture in the interconnecting voids.

16. A method for preventing a volume increase of a solid-liquid mixture after decreasing the fluidity by dispersing, in a solid-liquid mixture, a granular material having interconnecting voids in a cotton-like structure formed by entangled fibers, and infiltrating and capturing a solid phase and a liquid phase of the solid-liquid mixture in the interconnecting voids.
